(19) Europäisches Patentamt
European Patent Office
Office européen des brevets

(11) EP 0 570 795 B1

(12) **EUROPÄISCHE PATENTSCHRIFT**

(45) Veröffentlichungstag und Bekanntmachung des Hinweises auf die Patenterteilung:
**19.08.1998 Patentblatt 1998/34**

(51) Int Cl.$^6$: **C08J 7/04**, G03C 1/89, G03C 1/85

(21) Anmeldenummer: **93107556.8**

(22) Anmeldetag: **10.05.1993**

(54) **Antistatische Kunststoffteile**

Antistatic plastic parts

Pièces antistatiques en matière plastique

(84) Benannte Vertragsstaaten:
**BE DE FR GB NL**

(30) Priorität: **21.05.1992 DE 4216762**

(43) Veröffentlichungstag der Anmeldung:
**24.11.1993 Patentblatt 1993/47**

(73) Patentinhaber: **Agfa-Gevaert AG**
**51373 Leverkusen (DE)**

(72) Erfinder:
- **Quintens, Dirk**
  **B-2500 Lier (BE)**
- **Fischer, Wolfgang**
  **W-5005 Meerbusch 3 (DE)**
- **Jonas, Friedrich**
  **W-5100 Aachen (DE)**
- **Ohst, Holger**
  **W-5068 Odenthal-Steinhaus (DE)**
- **Rehbein, Hans**
  **W-4150 Krefeld (DE)**

(56) Entgegenhaltungen:
**EP-A- 0 188 264** **EP-A- 0 421 345**
**EP-A- 0 440 957** **EP-A- 0 564 911**
**WO-A-91/02289** **DE-A- 4 129 282**
**US-A- 4 571 361**

- **DATABASE WPI Week 9211, Derwent Publications Ltd., London, GB; AN 92-86546 (AGFA-GEVAERT NV) 10. Februar 1992 research disclosure vol. 334, abstract no. 83**

EP 0 570 795 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft eine haftfeste Antistatikausrüstung für Kunststoff-Formteile auf der Basis von Polythiophen- oder Vanadiumpentoxid-Zubereitungen.

Es ist bekannt, Zubereitungen von Polythiophenen, die Polyanionen enthalten, zur antistatischen Ausrüstung von Kunststoff-Formteilen, insbesondere Trägern für fotografische Materialien, einzusetzen (EP-440 957). Weiterhin ist bekannt, zur antistatischen Ausrüstung von Kunststoff-Formteilen Vanadiumpentoxid-Zubereitungen einzusetzen (DE 26 31 628). Es hat sich nun gezeigt, daß bei ausgezeichneter antistatischer Wirkung die Antistatikschicht Nachteile in der Haftfestigkeit, im Adhäsionsverhalten gegenüber Gelatineoberflächen und in der Kratzfestigkeit aufweist.

Aufgabe der Erfindung war es, diesen Nachteil zu beheben, ohne die antistatische Wirkung zu beeinträchtigen. WO-A-9102289 beschreibt photographische Filme mit einer antistatischen V2O5-Schicht und einer Latex-Schutzschicht mit hydrophilen Funktionen.

Aufgabe der Erfindung war insbesondere, einen hydrophoben Kunststoffträger, z.B. einen Polyethylenterephthalatfilm oder ein beidseitig polyethylenbeschichtetes Papier, der wenigstens eine antistatische Beschichtung aufweist, mit einer alternativen Schutzschicht zu versehen, die die antistatischen Eigenschaften nicht beeinträchtigt.

Insbesondere war Aufgabe der Erfindung, einen mit wenigstens einer GelaLine-Silberhalogenidemulsionsschicht beschichteten hydrophoben Kunststoffträger, der auf der Rückseite eine Antistatikschicht aufweist, mit einer die Antistatikschicht schützenden, wasserundurchlässigen Schicht zu versehen, ohne daß die antistatischen Eigenschaften beeinträchtigt werden.

Diese Aufgabe wird dadurch gelöst, daß man auf die auf den hydrophoben Träger aufgebrachte Antistatikschicht eine strahlenhartbare Beschichtungsmasse aufbringt und letztere durch Einwirkung einer ionisierenden Strahlung, z. B. UV- oder Elektronen-Strahlung zu einer wasserundurchlässigen Schutzschicht härtet, wobei weder die antistatisch wirkende Schutzschicht noch die wasserundurchlässige gehärtete Schutzschicht ein Silan der Formel (II)

$$X_{4-m}\text{-Si}(OR_3)_m \qquad (II)$$

wobei

R3 ein Wasserstoff, ein aliphatische Kohlenwasserstoffrest mit weniger als 10 Kohlenstoffatomen oder ein Acylrst mit weniger als 10 Kohlenstoffatomen,
X

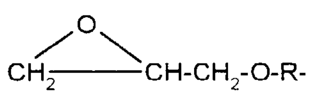

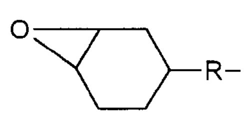

$NH_2$-R-, $NH_2$-$CH_2$-$CH_2$-NHR- oder R-
und R ist ein Kohlenstoffrest mit 1 bis 20 C-Atomen und
m = 1 bis 3 bedeuten,

enthält.

Als antistatische Schicht im Sinne der Erfindung wird eine Schicht verstanden, die dem Material eine Mobilität der elektrischen Ladungen, bestimmt als Entladungszeit in msec, von weniger als 10 msec, insbesondere weniger als 1 msec bei 21°C und einer relativen Feuchte von 30 % verleiht.

Die antistatische Schicht enthält vorzugsweise eine Zubereitung eines Vanadiumpentoxidsols oder besonders bevorzugt die Zubereitung eines Polythiophens, das aus Struktureinheiten der Formel

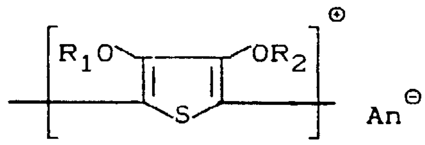

(I),

aufgebaut ist, in der

$R_1$ und $R_2$ unabhängig voneinander für Wasserstoff oder eine $C_1$-$C_4$-Alkylgruppe stehen oder zusammen einen gegebenenfalls substituierten $C_1$-$C_4$-Alkylen-Rest, vorzugsweise einen gegebenenfalls durch Alkylgruppen substituierten Methylen-, einen gegebenenfalls durch $C_1$-$C_{12}$-Alkyl- oder Phenylgruppen substituierten Ethylen-1,2-Rest, einen Propylen1,3-Rest oder einen Cyclohexylen-1,2-Rest bilden, und

$An^{\oplus}$ ein Polyanion bedeutet.

$R_1$ und $R_2$ sind vorzugsweise Methyl- und Ethylgruppen.

Als Vertreter der gegebenenfalls substituierten $C_1$-$C_4$-Alkylenreste, die $R_1$ und $R_2$ zusammen bilden können, seien vorzugsweise die Alkylen-1,2-Reste genannt, die sich von den 1,2-Dibrom-alkanen ableiten, wie sie beim Bromieren von $\alpha$-Olefinen, wie Ethen, Propen-1, Hexen-1, Octen-1, Decen-1, Dodecen-1 und Styrol erhältlich sind; außerdem seien genannt der Cyclohexylen-1,2-, Butylen2,3-, 2,3-Dimethyl-butylen-2,3- und Pentylen-2,3-Rest.

Bevorzugte Reste für $R_1$ und $R_2$ gemeinsam sind der Methylen-, Ethylen-1,2- und Propylen-1,3-Rest, besonders bevorzugt ist der Ethylen-1,2-Rest.

Als Polyanionen dienen die Anionen von polymeren Carbonsäuren, wie Polyacrylsäuren, Polymethacrylsäuren, oder Polymaleinsäuren und polymeren Sulfonsäuren, wie Polystyrolsulfonsäuren und Polyvinylsulfonsäuren. Diese Polycarbon- und -sulfonsäuren können auch Copolymere von Vinylcarbon- und Vinylsulfonsäuren mit anderen polymerisierbaren Monomeren, wie Acrylsäureestern und Styrol, sein.

Das Molekulargewicht $\overline{M}n$ der die Polyanionen liefernden Polysäuren beträgt vorzugsweise 1000 bis 2 000 000, besonders bevorzugt 2000 bis 500 000. Die Polysäuren oder ihre Alkalisalze sind im Handel erhältlich, z.B. Polystyrolsulfonsäuren und Polyacrylsäuren, oder aber nach bekannten Verfahren herstellbar (siehe z.B. Houben-Weyl, Methoden der organischen Chemie, Bd. E 20 Makromolekulare Stoffe, Teil 2, (1987), S. 1141 u.f.).

Anstelle der für die Bildung der erfindungsgemäßen Zubereitungen aus Polythiophenen und Polyanionen erforderlichen freien Polysäuren, kann man auch Gemische aus Alkalisalzen der Polysäuren und entsprechenden Mengen an Monosäuren einsetzen.

Die Zubereitungen können echte Lösungen, kolloidale Lösungen oder feinteilige Dispersionen sein.

Die Herstellung dieser Zubereitungen ist in EP-A-0 440 957 beschrieben.

Als Lösungsmittel oder Dispersionsmedium der Polythiophen-Zubereitungen kommen neben Wasser auch andere protische Lösungsmittel in Betracht, z.B. niedere Alkohole wie Methanol, Ethanol und Isopropanol sowie Mischungen von Wasser mit niederen Alkoholen und anderen mit Wasser mischbaren organischen Lösungen wie Aceton in Betracht.

Die Polythiophen-Zubereitungen können niedermolekulare Netzmittel oder Dispergatoren enthalten, z.B. anionische Tenside wie Natriumdodecylsulfat, kationische Tenside wie Cetyltrimethylammoniumbromid und nicht-ionische Tenside wie Alkylphenol-polyethylenoxid-Addukte, die vor, während oder nach der Polymerisation zugemischt werden. Das Zumischen nicht-ionischer Tenside vor der Polymerisation ist bevorzugt.

Der Begriff "Dispersion" schließt ebenso Makrodispersionen mit mittleren Teilchengrößen von mehr als 100 nm wie kolloidale Dispersionen mit mittleren Teilchengrößen von Molekülgröße bis zu Molekülagglomeraten mit nicht mehr als 100 nm mittleren Teilchengrößen ein.

Die Polythiophen-Zubereitungen können zur Antistatikausrüstung der Kunststoff-Formteile auf diese nach bekannten Verfahren, z.B. durch Tränken, Gießen, Besprühen, Tiefdruck, Rakeln, Streichen usw. aufgebracht werden. Nach dem Entfernen des Lösungsmittels, z.B. des Wassers, liegt unmittelbar die von dem Polythiophen auf dem behandelten Formteil gebildete, von der Luftfeuchtigkeit unabhängige antistatische Schicht vor.

Zur Erzielung besser haftender und kratzfester Beschichtungen können den Polythiophen-Salz-Zubereitungen auch noch wasserlösliche, bzw. in Wasser suspendierbare polymere Bindemittel, z.B. Polyvinylalkohol oder Polyvinylacetat-Dispersionen zugesetzt werden.

Bei säureempfindlichen Kunststoff-Formteilen und zur Schonung der zum Aufbringen verwendeten Geräte kann

es vorteilhaft sein, in den Polythiophen-Salz-Zubereitungen vor dem Aufbringen auf die Kunststoff-Formteile überschüssige freie Säuregruppen durch Zugabe von Alkalioder Erdalkalihydroxiden, Ammoniak oder Aminen zu neutralisieren.

Die Dicke der Schichten, in denen die Polythiophen-Dispersionen auf die antistatisch auszurüstenden Kunststoff-Formteile aufgebracht werden, beträgt nach dem Trocknen in Abhängigkeit von der gewünschten Leitfähigkeit des Formkörpers und der gewünschten Transparenz der Beschichtung 0,001 bis 100 µm, vorzugsweise 0,002 bis 10 µm.

Das Entfernen der Lösungsmittel nach dem Aufbringen der Lösungen kann durch einfaches Abdampfen bei Raumtemperatur erfolgen. Zur Erzielung höherer Verarbeitungsgeschwindigkeiten ist es jedoch vorteilhafter, die Lösungsmittel bei erhöhten Temperaturen, z.B. bei Temperaturen bis zu 150°C, bevorzugt 60 bis zu 130°C, zu entfernen.

Die Herstellung der Polythiophendispersionen oder -lösungen nach EP-OS 440 957 führt zu Produkten, in denen der Gehalt an polymerisiertem Thiophen 5 bis 50 Gew.-%, bezogen auf Gesamtfeststoff, ausmacht. Bei der Herstellung dieser Polythiophendispersionen können zusätzlich bis zu 90 Gew.-%, bezogen auf Gesamtfeststoff, andere Polymerlatices bzw. -dispersionen zugesetzt werden, die saure Gruppen (Salze) wie $-SO_3^-$, $-COO^-$, Phenolat oder $-PO_3^{2-}$ aufweisen. Der Gehalt an sauren Gruppen liegt vorzugsweise über 2 Gew.-%, um eine ausreichende Stabilität der Dispersion oder Lösung zu gewährleisten.

Polymere die für diesen Zweck geeignet sind werden beispielsweise in DE-A 25 41 230, DE-A 25 41 274, DE-A 28 35 856, EP-A-0 014 921, EP-A-0 069 671, EP-A-0 130 115, US-A-4 291 113 beschrieben.

Die Polymerdispersionen bzw. Latices können lineare, verzweigte oder vernetzte Polymere enthalten. Die vernetzten Polymere mit hohem Gehalt an sauren Gruppen sind in Wasser quellbar und können in Form sogenannter Mikrogele eingesetzt werden. Derartige Mikrogele werden beispielsweise in US 4 301 240, US 4 677 050 und US 4 147 550 beschrieben.

Die eingesetzte Menge an polymerisiertem Thiophen in der eingesetzten Dispersion oder Lösung beträgt vorzugsweise 0,001 bis 0,3 $g/m^2$, insbesondere 0,003 bis 0,2 $g/m^2$.

Die Herstellung der zur antistatischen Beschichtung eingesetzten Vanadiumpentoxidsole kann durch Aufschmelzen von Vanadiumpentoxid und Eingießen der Schmelze in Wasser erfolgen. Die auf diese Weise erhaltenen Vanadiumpentoxidsole können direkt zur Beschichtung von Kunststoffen eingesetzt werden.

Die Herstellung der Vanadiumpentoxidsole erfolgt bevorzugt durch Umsetzung von Alkali-, Erdalkali- oder Ammoniumvanadaten mit stark sauren Ionenaustauschern, bevorzugt mit $SO_3H$-Gruppen enthaltenden Ionenaustauschern. Die Herstellung der Vanadiumpentoxidsole erfolgt z.B. dadurch, daß man den Ionenaustauscher mit Ammoniumvanadat in wäßriger Lösung rührt. Das entstehende Vanadiumpentoxidsol wird vom Ionenaustauscher abfiltriert und ist direkt gebrauchsfertig. Der Ionenaustauscher wird in einer solchen Menge eingesetzt, daß die Anzahl der vorhandenen Säuregruppen ausreicht, um die gesamte Menge Ammonium- oder Alkali- bzw. Erdalkalionen zu binden.

Bevorzugt wird mit einem Überschuß an Säuregruppen gearbeitet. Das Vanadat wird in einer solchen Menge eingesetzt, daß das entstehende Vanadiumpentoxidsol bevorzugt weniger als 5 Gew.-%, besonders bevorzugt 0,005 bis 1 Gew.-% Vanadiumpentoxidfeststoff enthält. Um eine gleichmäßigere Beschichtung der Folien zu erreichen, kann man den Vanadiumpentoxidsolen Tenside zusetzen. Als Tenside seien beispielsweise genannt: Alkalialkylsulfonate oder -sulfate, fluorierte Alkylsulfonsäuresalze z.B. Natriumperfluoroctylsulfonat.

Die Dicke der Schicht, in der $V_2O_5$ auf die antistatisch auszurüstende Kunststoff-Formteile aufgebracht wird, beträgt nach dem Trocknen in Abhängigkeit von der gewünschten Leitfähigkeit des Formkörpers 0,001 bis 1 µm, vorzugsweise 0,003 bis 0,1 µm.

Besonders farbarme Beschichtungen mit niedrigem Oberflächenwiderstand erhält man, wenn man das Vanadiumpentoxidsol vor der Verarbeitung altert. Die frisch hergestellten Vanadiumpentoxidsole werden bevorzugt erst nach 1 Woche, besonders bevorzugt nach 2 bis 20 Wochen Alterung bei Raumtemperatur zur Beschichtung verwendet. Außerdem hat es sich bewährt, die Vanadiumpentoxidsole vor der Verarbeitung mit Wasser zu verdünnen. Die Beschichtung der antistatisch auszurüstenden Kunststoff-formteile, speziell Folien, erfolgt nach bekannten Verfahren, z. B. durch Tauchen, Aufrakeln, Aufsprühen, Drucken, z.B. Tiefdruck oder Gießen.

Als Substrate, die nach dem erfindungsgemäßen Verfahren antistatisch bzw. elektrisch-leitfähig ausgerüstet werden, seien vor allem Formkörper aus organischen Kunststoffen, insbesondere Folien aus Polycarbonaten, Polyamiden, Polyethylenen, Polypropylenen, Polyvinylchlorid, Polyestern, Celluloseacetat und Cellulose genannt, aber auch anorganische Werkstoffe, z.B. Glas oder keramische Wirkstoffe aus Aluminiumoxid und/oder Siliciumdioxid sind nach dem erfindungsgemäßen Verfahren antistatisch ausrüstbar.

Geeignete hydrophobe Kunststoffträger für fotografische Silberhalogenidmaterialien sind literaturbekannt und bestehen z.B. aus Polyester, Cellulosetriacetat, Polyvinylchlorid oder Polycarbonat. Bevorzugt ist Polyethylenterephthalat. Weiterhin geeignet ist ein mit Poly-$\alpha$olefin beschichtetes Papier, insbesondere mit Polyethylen beschichtetes Papier.

Der hydrophobe Kunststoffträger wird vor der Beschichtung mit der Antistatikschicht gegebenenfalls mit einer oder mehreren Substratschichten versehen, um die Haftung hydrophiler, nachfolgend aufgebrachter Kolloidschichten zu verbessern. Geeignete Substratschichten für Polyethylenterephthalatträger sind z.B. aus US 3 397 988, 3 649 336, 4

123 278, 4 478 907, GB 1 234 755 und Research Disclosure, Juli 1967, Seite 6 bekannt. Besonders geeignete Substratschichten sind aus Vinylidenpolymeren mit copolymerisierten, ethylenenisch ungesättigten hydrophilen Monomeren, vorzugsweise Itaconsäureeinheiten (US 3 649 336).

In einer Ausführungsform der Erfindung befindet sich die Antistatikschicht auf der gleichen Seite des Trägers wie die fotografischen Schichten und ist von diesen durch die strahlengehärtete Beschichtungsmasse getrennt.

In einer weiteren Ausführungsform der Erfindung befindet sich die Antistatikschicht auf der von den fotografischen Schichten abgekehrten Seite des Trägers; damit wird die strahlengehärte Beschichtungsmasse zur äußersten Schutzschicht auf der Rückseite des fotografischen Materials und dient zusätzlich als Antiabriebschicht.

In einer bevorzugten Ausführungsform der Erfindung befindet sich über den auf der Rückseite des fotografischen Materials angebrachten Antistatik- und Schutzschichten eine sogenannte NC-Schicht (anti-curling-Schicht), die der Tendenz des naßverarbeiteten Materials, sich zu rollen, entgegenwirkt. Die NC-Schicht enthält ein hydrophiles Kolloid, z.B. Gelatine, und kann wenigstens teilweise gehärtet sein, um Wasseraufnahme und Abrieb zu vermindern. Geeignete Härtungsmittel sind in The Theory of the Photographic Process, herausgegeben von T.H. James, 4. Auflage, Seite 77 bis 87 beschrieben.

Das auf der Rückseite des Trägers im Hinblick auf die Silberhalogenidemulsions-Schichten aufgebrachte Schichtpaket aus Antistatikschicht und Schutzschicht kann weiterhin von einer Antihalo-Schicht, die ein oder mehrere Farbstoffe oder Pigmente in einem hydrophilen Kolloid enthält, z.B. in Gelatine, überdeckt sein. Die Farbstoffe und Pigmente können in den Verarbeitungslösungen entfärbbar oder beständig sein.

Die erfindungsgemäßen Silberhalogenidmaterialien können zur Halbtonfotografie, Rasteraufnahme, Mikrofotografie und Radiografie verwendet werden. Sie eignen sich für Schwarz-Weiß- und Farbmaterialien sowie für Silberkomplexdiffusionstransferumkehr- (DTR) und Farbstoffdiffusionstransferprozesse.

Die Zusammensetzung der Silberhalogenidemulsionsschichten ist z.B. in Research Disclosure 17 643 (Dezember 1978) und Research Disclosure 307 105 (November 1989) beschrieben.

Mit der erfindungsgemäßen Kombination von Antistatikund Deckschicht können Probleme, die durch statische Aufladungen verursacht werden, vermieden oder erheb-lich verringert werden. Dies gilt nicht nur für fotografische Materialien, sondern auch für Materialien für die Diazotypie, für Versicularmaterialien, magnetische, elektrografische oder elektrofotografische Aufzeichnungsmaterialien.

Die nachfolgenden Beispiele beziehen sich auf die Verwendung des Schichtpaketes aus Antistatik- und Deckschicht bei Polyethylenterephthalatträgern mit einer Substratschicht, aber auch auf Träger aus Polystyrol, Polyvinylchlorid oder Polyethylen kann das Schichtpaket angewendet werden, wobei alle Träger zuvor gegebenenfalls einer Corona-Entladung ausgesetzt waren, um die Haftung der hydrophilen Kolloidschichten zu verbessern.

Wegen ihrer Transparenz eignen sich die erfindungsgemäß erhältlichen Beschichtungen insbesondere zur antistatischen Ausrüstung von fotografischen Materialien, insbesondere Filmen, z.B. Schwarz-Weiß-, Colornegativ- und Umkehrfilmen, vorzugsweise in Form einer Rückseitenschicht, das heißt, in einer Schicht, die auf der den Silberhalogenidemulsionsschichten abgewandten Seite des hydrophoben Schichtträgers aufgebracht wird.

Geeignete strahlenhärtbare Beschichtungsmittel sind z.B. (Meth)Acryloylgruppen enthaltende Prepolymere, die mindestens zwei (Meth)Acryloylgruppen, vorzugsweise zwei bis vier (Meth)Acryloylgruppen pro Molekül, enthalten und sich von Polyestern, Polyethern, Polyepoxidverbindungen, aliphatischen Polyolen, Polyurethanen und Vinylpolymerisaten ableiten. Derartige (Meth)Acrylatprepolymere sind bekannt und beispielsweise beschrieben in US-PS 2 101 107; 2 413 973; 2 951 758; 3 066 112; 3 301 743; 3 368 900; 3 380 831; 3 455 801; 3 469 982; 3 485 732; 3 530 100; 3 551 246; 3 552 986; 3 628 963; 3 660 145; 3 664 861; 3 689 610; 3 719 521; 3 732 107; 3 782 961; 3 840 369; 3 888 830; 4 033 920; 4 081 492; 4 206 025;
GB-PS 1 006 587; 1 241 823; 1 241 824; 1 321 372;
DE-OS 1 916 499; 2 429 527; 2 534 012; 2 737 406 und 2 853 921.

Bevorzugte (Meth)Acrylatprepolymere sind Polyester(meth)acrylate wie sie durch Azeotropveresterung von Dicarbonsäuren mit di- oder höherfunktionellen Polyolen und (Meth)acrylsäure erhalten werden. Gängige Dicarbonsäuren sind z.B. Phthalsäure und Adipinsäure. Polyole sind z.B. Glykol und Polyethylenglykol, Trimethylolpropan, Glycerin und Pentaerythrit, Umsetzungsprodukte aus Polyepoxiden, z.B. Bisphenol-A-bis-glycidylether mit (Meth)Acrylsäure und Polyurethan(meth)acrylate, wie sie durch Addition von Hydroxyalkyl(meth)acrylat an aromatische oder aliphatische Polyisocyanate und gegebenenfalls weitere Addition an Polyole erhalten werden.

Weiterhin können aminmodifizierte Polyetheracrylate, wie sie gemäß DE-OS 3 706 355 aus aliphatischen primären Aminen und (Meth)-acrylsäureestern von ethoxylierten oder propoxylierten Polyolen erhalten werden, als (Meth)-acryloylgruppen enthaltende Präpolymere als Decklackbindemittel eingesetzt werden.

Zur Herstellung dünner Deckschichten, mit einer Dicke unter 4 µm sind auch kationisch härtende, durch UV-Strahlung aktivierbare Lacksysteme, z.B. auf Epoxidoder Vinylether-Basis einsetzbar, da bei diesen Systemen auch bei geringen Schichtdicken auf eine Härtung unter Inertgas verzichtet werden kann.

Geeignete Systeme sind z.B. im J.V. Crivello, J. L. Lee and D. A. Coulon, New Monomers for cationic U.V.-Curing, Radiation Curing VI, Conference Proceedings (Sept. 20 bis 23, 1982) Chicago, Illinois, beschrieben und werden z.B.

unter der Bezeichnung Cyracure® von der Fa. Union Carbide vertrieben.

Als übliche Hilfsmittel enthalten die erfindungsgemäßen Deckschichtbindemittel reaktive strahlenhärtbare Verdünner oder Mischungen dieser Verdünner. Neben der Funktion als Verdünnungsmittel für das Prepolymere dienen diese Produkte auch zur Variation der mechanischen Eigenschaften, z.B. der Härte des resultierenden Films. Derartige reaktive strahlenhärtbare Verdünner sind beispielsweise Acryl- bzw. Methacrylsäureester, vorzugsweise von einbis dreiwertigen Alkoholen oder von deren Oxalkylierungsprodukten, insbesondere von deren Oxethylierungsprodukten. Im Falle der Oxalkylierungsprodukte sind auf 1 Hydroxylgruppe des jeweiligen ein- oder mehrwertigen Alkohols durchschnittlich 0,8 bis 12 mol Alkylenoxid, wie Ethylenoxid oder Propylenoxid, vorzugsweise Ethylenoxid, angelagert worden.

Besonders bevorzugt sind als reaktive strahlenhärtbare Verdünner die Acrylate der zwei- und dreiwertigen Alkohole bzw. ihre Oxethylierungsprodukte.

Namentlich seien beispielhaft genannt: Ethylenglykoldi(meth)acrylat, Di(meth)acrylate des Diethylenglykols, Triethylenglykols, Tetraethylenglykols und Pentaethylenglykols; Propylenglykol-di(meth)acrylat; Di(meth)acrylate des Di- bis Pentapropylenglykols; Neopentyl-di(meth)acrylat; Butandiol-1,4-di(meth)acrylat; Hexandiol1,6-di(meth)acrylat; Trimethylolpropan-tri(meth)acrylat, Triacrylate des oxethylierten Trimethylolpropans mit einem Oxethylierungsgrad von 2,5 bis 4 gemäß DE-PS 2 651 507. Reaktive strahlenhärtbare Verdünner sind im Bereich von 0 bis 83 Gew.-%, bezogen auf die Gesamtmenge der polymerisierbaren Bestandteile, erhalten. Die erfindungsgemäßen Decklackrezepturen enthalten als wesentliche Bestandteile als Beschleuniger aminmodifizierte Polyetheracrylate. Diese werden durch Addition von sekundären, aliphatischen Amine an reaktive Verdünner, die wenigstens zwei (Meth)acryloylgruppen pro Molekül enthalten. Geeignete Verbindungen sind in DE 23 46 424 beschrieben.

Im Deckschichtbindemittel können als Hilfsstoffe 0,001 bis 0,2 Gew.-%, bezogen auf strahlenhärtbare Komponenten, an üblichen Polymerisationsinhibitoren oder Antioxidantien enthalten sein. Derartige Verbindungen sind beispielsweise: 4,4'-Bis-(2,6-di-tert.-butylphenol), 1,3,5-Trimethyl-2,4,6-tris-(3,5-di-tert.-butyl-4-hydroxy-benzyl)-benzol, 4,4'-Butyliden-bis-(6-tert.-butylm-kresol), 3,5-Di-tert.-butyl-4-hydroxybenzylphosphonsäurediethylester, N,N'-Bis-(β-naphthyl)-p-phenylendiamin, N,N'-Bis-(1-methylheptyl)-p-phenylendiamin, Phenyl-β-naphthylamin, 4,4'-Bis(α,α-dimethylbenzyl)-diphenylamin, 1,3,5-Tris(3,5-di-tert.-butyl-4-hydroxyhydrocinnamoyl)-hexahydro-s-triazin, Hydrochinon, p-Benzochinon, Hydrochinonmonomethylether, 2,5-Di-tert.-butylchinon, Toluhydrochinon, p-tert.-Butylbrenzcatechin, 3-Methylbrenzcatechin, 4-Ethylbrenzcatechin, Chloranil, Naphthochinon, Kupfernaphthenat, Kupferoctoat, Cu(I)Cl/Triphenylphosphit, Cu(I)Cl/Trimethylphosphit, Cu(I)Cl/ Trischlorethyl-phosphit, Cu(I)Cl/Tripropylphosphit, p-Nitrosodimethylanilin.

Weiter können im Deckschichtbindemittel als Hilfsstoffe 0,1 bis 5 Gew.-%, bezogen auf strahlenhärtbare Komponenten vorhanden sein, z.B. Antiabsetzmittel wie Dimethylstearylamin, Distearylamin, Stearinsäure, Metallstearate, ein- bis dreiwertige Metalle, Stearylalkohol, die entsprechenden Oleylderivate oder oberflächenaktive Agentien wie hochdisperse Kieselsäuren und Gleitmittel wie Silicone.

Das Aufbringen der Antistatikschicht erfolgt z.B. mit in der Fotoindustrie üblichen Walzenantragssystemen.

Das Aufbringen der erfindungsgemäßen Deckschichten erfolgt mit technischen Beschichtungssystemen, z.B. durch Druckverfahren wie Flexo- und Tiefdruck, oder mit Walzenantragssystemen oder durch Aufrakeln oder Gießen. Ihre Trockenschichtstärke beträgt insbesondere 0,5 bis 25 g/m$^2$.

Die Härtung erfolgt mittels ionisierender Strahlung, gegebenenfalls unter Inertgas, z.B. durch Elektronenstrahlen. Obwohl die Härtung mit einer Strahlendosis von etwa 0,1 bis 200 kGy ausgeführt werden kann, bevorzugt man aus wirtschaftlichen Gründen kontinuierlich arbeitende Beschichtungsanlagen, deren Strahlungsquellen eine Beschleunigerspannung von 100 bis 500 Kilo-Volt (kV), entsprechend einer Strahlendosis von 10 bis 500 kGy aufweisen. Der Abstand der Elektronenstrahlenquelle von der zu härtenden Schicht beträgt üblicherweise 10 bis 20 cm.

Erfolgt die Härtung der Deckschichten durch UV-Strahlung, müssen die Deckschichtbindemittel in bekannter Weise noch mit Fotoinitiatoren sowie gegebenenfalls Fotosensibilisatoren versehen werden.

Die anzuwendenden Fotoinitiatoren bzw. Fotosensibilisatoren sind an sich bekannt, und deren Auswahl ist nicht Gegenstand der Erfindung. Ihre Anwendung ist weitgehend begrenzt auf die zweckmäßige Anwendung von UV-Strahlung, jedoch können grundsätzlich auch andere ionisierende Strahlungsarten zur Anwendung gelangen. Brauchbare Fotoinitiatoren bzw. Fotosensibilisatoren sind z.B. Benzophenon, Acetophenon, Benzoin und Methyl-, Ethyl-, Isopropyl-, Butyl- oder Isobutylether von Benzoin, α-Hydroxi- bzw. α-Aminoarylketone sowie Benzilketale. Diese Substanzen werden im allgemeinen in Konzentration von 0,1 bis 7,5 Gew.-%, bezogen auf polymerisierbare Anteile, zugesetzt.

In einer bevorzugten Ausführungsform bestehen die erfindungsgemäßen, strahlenhärtbaren Decklacke aus

(a) 25 bis 95 Gew.-Teile (Meth)acryloylgruppen enthaltendes Prepolymer,

(b) 0 bis 125 Gew.-Teile reaktiver Verdünnung,

(c) 0 bis 35 Gew.-Teile aminmodifiziertes Polyetheracrylat,

(d) 0 bis 7,5 Gew.-% UV-Initiator und

(d) 0,1 bis 5,0 Gew.-% weitere Additive,

wobei sich die Gewichtsprozente auf die Summe aus (a), (b) und (c) beziehen.

Beispiele

Beispiel 1

Herstellung der Antistatikbeschichtungslösung I

Eine Mischung aus 20 g Polystyrolsulfonsäure ($M_n$ ca. 44.000), 3,6 g Kaliumperoxodisulfat, 5,6 g 3,4-Ethylendioxythiophen und Wasser wird 24 Stunden bei Raumtemperatur gerührt. Die erhaltene 3,4-Polyethylendioxythiophenpolystyrolsulfonatlösung ist anschließend gebrauchsfertig.

Beispiel 2

Herstellung der Antistatikbeschichtungslösung II

Eine Mischung aus 20 g Polystyrolsulfonsäure ($M_n$ ca. 44.000), 8,1 g Kaliumperoxodisulfat, 5,6 g 3,4-Ethylendioxythiophen, 0,1 g Eisen-III-sulfat (Eisengehalt 22 Gew.-%) und 1 1 Wasser wir 24 Stunden bei Raumtemperatur gerührt. Die erhaltene 3,4-Polyethylendioxythiophenpolystyrolsulfonatlösung ist anschließend gebrauchsfertig.

Beispiel 3

Herstellung der Antistatikbeschichtungslösung III

Eine Mischung aus 6,7 g Polystyrolsulfonsäure ($M_n$ ca. 38.000), 14,4 g Kaliumperoxodisulfat, 33,6 g 3,4-Ethylendioxythiophen, 0,45 g Sulfobernsteinsäurediisooctylester-Na-Salz und 1 l Wasser wird 24 Stunden bei Raumtemperatur gerührt. Die erhaltene 3,4-Polyethylendioxythiophenpolystyrolsulfonatlösung ist anschließend gebrauchsfertig.

Beispiel 4

Herstellung der Antistatikbeschichtungslösung IV

Eine Mischung aus 20 g Polystyrolsulfonsäure ($M_n$ ca. 44.000), 3,6 g Kaliumperoxodisulfat, 5,6 g 3,4-Ethylendioxythiophen und 1.000 ml Wasser wird 24 Stunden bei Raumtemperatur gerührt. Die erhaltene 3,4-Polyethylendioxythiophenpolystyrolsulfonatlösung ist anschließend gebrauchsfertig.

Die Lösungen der Beispiele 1 bis 4 werden vor der Beschichtung der Filmunterlagen mit Wasser auf einen Feststoffgehalt von 0,3 Gew.-% verdünnt.

Beispiele 5 bis 8

Herstellung der antistatischen Filmunterlagen

Auf Polyethylenterephthalat-Filmunterlagen mit einer Dicke von 100 µm, die mit einer Haftschicht auf Basis Vinylidenchlorid-Methylmethacrylat-Itaconsäure-Copolymer beschichtet sind, werden mit einem Walzenantragssystem die mit Wasser verdünnten Antistatikbeschichtungslösungen der Beispiele 1 bis 4 aufgetragen und die Beschichtung anschließend getrocknet. Die beschichteten Folien weisen folgende Eigenschaften auf:

Tabelle 1

| Filmunterlage Bsp. | Beschichtungslösung gem. Beispiel | Beschichtungsmenge, trocken mg/$m^2$ | Entladezeit msec bei 30 % rel. Feuchte |
|---|---|---|---|
| 5 | 3 | 61 | < 0,006 |
| 6 | 4 | 52 | < 0,006 |

Tabelle 1 (fortgesetzt)

| Filmunterlage Bsp. | Beschichtungslösung gem. Beispiel | Beschichtungsmenge, trocken $mg/m^2$ | Entladezeit msec bei 30 % rel. Feuchte |
|---|---|---|---|
| 7 | 1 | 50 | < 0,006 |
| 8 | 2 | 200 | < 0,006 |

Die zur Herstellung der Deckschichten eingesetzten Beschichtungsmassen besaßen folgende Zusammensetzungen:

Beispiel 9

100 Gew.-Teile Aminmodifiziertes Polyetheracrylat
15 Gew.-Teile Hexandiol-1,6-diacrylat
6,5 Gew.-Teile Trimethylbenzophenon, Isomerengemisch

Beispiel 10

60 Gew.-Teile Epoxiacrylatharz gemäß DE-OS 24 29 527, Beispiel 3 (Verbindung 1)
35 Gew.-Teile propoxyliertes Trimethylolpropantri acrylat (Verbindung 2)
24 Gew.-Teile diethylaminmodifiziertes, propoxy liertes Trimethylolpropantriacrylat (Verbindung 3)
60 Gew.-Teile Hexandiol 1,6-diacrylat
10 Gew.-Teile Benzophenon

Beispiel 11

60 Gew.-Teile aliphatisches Urethanacrylat gemäß DE-OS 27 37 406, Beispiel 1
32 Gew.-Teile Verbindung 2
48 Gew.-Teile Verbindung 3
84 Gew.-Teile Hexandiol 1,6-diacrylat
12 Gew.-Teile Benzophenon

Beispiel 12

75 Gew.-Teile aliphatisches Urethanacrylat gemäß Beispiel 11
50 Gew.-Teile Polyetheracrylat
15 Gew.-Teile Verbindung 3
100 Gew.-Teile Hexandiol 1,6-diacrylat
10 Gew.-Teile Benzophenon
5 Gew.-Teile 1-Hydroxycyclohexylphenylketon
3 Gew.-Teile niedrigviskoses Polydimethylsiloxan.

Beispiel 13

60 Gew.-Teile Verbindung 1
35 Gew.-Teile Verbindung 2
24 Gew.-Teile Verbindung 3
60 Gew.-Teile Hexandiol 1,6-diacrylat
12,5 Gew.-Teile Trimethylbenzophenon, Isomerengemisch
0,3 Gew.-Teile niedrigviskoses Polydimethylsiloxan

Beispiel 14

81,5 Gew.-Teile Epoxiacrylat gemäß Beispiel 10
29 Gew.-Teile Verbindung 3
58,5 Gew.-Teile Hexandiol-1,6-diacrylat
12,5 Gew.-Teile Trimethylbenzophenon, Isomerengemisch

5 Gew.-Teile niedrigviskoses Polydimethylsiloxan

Beispiel 15

100 Gew.-Teile aminmodifiziertes Polyetheracrylat
15 Gew.-Teile Hexandiol-1,6-diacrylat
6,5 Gew.-Teile Trimethylbenzophenon, Isomerengemisch
5 Gew.-Teile niedrigviskoses Polydimethylsiloxan

Die Deckschichtbeschichtungsmittel wurden mit einem Handcoater auf die antistatisch ausgerüsteten Filmunterlagen aufgetragen und anschließend mit UV-Strahlung bzw. Elektronenstrahlung (EBC) gehärtet. Die Eigenschaften der Filmrückseitenschichten sind in der folgenden Tabelle 2 als Beispiele 19 bis 29 zusammengefaßt.

Die angegebenen Werte wurden wie folgt bestimmt:

Kratzfestigkeit:

wurde beurteilt nach Reiben mit einem harten Gegenstand.

Haftfestigkeit trocken:

Es wird ein Gitterschnittest nach DIN 53 151 durchgeführt, bei dem senkrecht zueinander zwei Scharen von jeweils 6 Schnitten mit Abstand 1 mm so ausgeführt werden, daß sie sich schneiden. Die Bewertung erfolgt mit einer graduellen Skala 0 bis 5, wobei 0 ein nach den Schnitten ansonsten unversehrten Lack darstellt und bei 5 bereits beim Ausführen der Schnitte der Lack zu mehr als 65 % der insgesamt 25 entstandenen Teilstücke abplatzen.

Haftfestigkeit naß:

Die Folien wurden für 10 min bei 38°C in Wasser gelagert und anschließend mit leichtem Druck trockengewischt. Beurteilung erfolgte mit einer qualitativen Skala von 0 (unverletzt) bis 5 (vollständig abgelöst).

Tabelle 2

| Bsp. | Antistatik-Schicht (Filmunterlage) | Deckschicht (Lackrezeptur) | Dicke [µm] | Kratzfestigkeit | Haftung trocken | Haftung naß | Härtungsbedingungen |
|---|---|---|---|---|---|---|---|
| 19 | 5 | 9 | 4 | unverletzt | 0 | 1 | UV[2] |
| 20 | 5 | 10 | 4 | " | 0 | 0 | UV |
| 21 | 6 | 10 | 4 | " | 0 | 0 | UV |
| 22 | 7 | 10 | 4 | " | 0 | 0 | UV |
| 23 | 5 | 11 | 4 | " | 0-1 | 0 | UV |
| 24 | 6 | 12 | 4 | " | 0 | 0 | UV |
| 25 | 7 | 12 | 4 | " | 0 | 0 | UV |
| 26 | 7 | 13 | 4 | " | 0-1 | 0 | UV |
| 27 | 7 | 14 | 4 | " | 0-1 | 0 | UV |
| 28 | 7 | 15 | 4 | " | 0 | 0 | UV |
| 29 | 7 | 10 | 4 | " | 0 | 3 | EBC[1] |

1) Bestrahlungsintensität: 50 KGy unter $N_2$
2) IST-Strahlertyp U 300-M-1-TR, Röhrentyp MC 200, UV = 180 bis 450 nm

Bestimmung der Entladungszeit

Für ausgewählte Beispiele wurde der kapazitive Widerstand (RC) entsprechend der Entladungszeit (in msec), die ein Maß für die Mobilität der elektrischen Ladungen darstellt, bei 30 X relative Luftfeuchtigkeit bei 21°C vor und nach einer Naßentwicklungsprozesses bestimmt.

Mit Naßentwicklung ist dabei eine übliche Entwicklungsund Fixierungsbehandlung gefolgt von Waschbädern und Trocknungsschritten, wie sie gewöhnlich bei der Verarbeitung von photografischen Silberhalogenid-Emulsionsmaterialien angewandet werden.

Die Resultate sind in Tabelle 3 angegeben:

Tabelle 3

| Beispiel | RC-Wert in msec | |
|---|---|---|
| | vor Naßentwicklung | nach Naßentwicklung |
| 7 | < 0,006 | 0,023 |
| 26 | 0,032 | 0,025 |
| 28 | < 0,006 | < 0,006 |
| 22 | 0,022 | 0,050 |
| 27 | 0,016 | 0,015 |
| 29 | 0,01 | 0,013 |
| 19 | < 0,006 | 0,10 |
| 20 | < 0,006 | < 0,006 |
| 23 | 0,057 | 0,12 |

Die Resultate in Tabelle 3 belegen, daß die Ladungsmobilität in den oben eingeführten Antistatik-/Deckschicht-Anordnungen nahezu unverändert vor und nach der Naßentwicklung ist, entsprechend Vergleichsbeispiel 7, das über keine schützende Deckschicht verfügt, wobei die so beschichteten Materialien einen sogenannten permanent antistatischen Charakter besitzen.

Das Klebeverhalten der Deckschichten zu photografischen Silberhalogenid-Emulsionsschichten wurde wie folgt geprüft: zuerst wird jede Probe einschließlich des Vergleichsbeispiels 7, für 24 Stunden unter Klimaraumbedingungen bei 60 % relativer Luftfeuchtigkeit und 21°C konditioniert, danach werden diese Proben mit besagten Silberhalogenid-Emulsionsschichten für 3 Tage bei 57°C in Kontakt gebracht.

Bei Trennung der direkt kontaktierten Materialien wurde kein Kleben der Emulsionsschicht zu irgendeiner der Proben (Beispiele 22, 26, 19, 20, 23, 27, 28, 29) beachtet, während die nicht mit einer Deckschicht versehene Beschichtung der Probe 7 sich von dem Kunststoffträger löste und auf die Emulsionsschicht übertragen wurde.

Beispiel 30

In 1000 g Wasser werden 20 g $NH_4VO_3$ und 300 g eines kationischen Ionenaustauschers gegeben und 10 Minuten bei Raumtemperatur gerührt. Während intensiven Rührens werden dann 1500 g Wasser hinzugefügt. Anschließend wird der Ionenaustauscher durch Filtration abgetrennt. Man erält eine kolloidale Lösung (Sol) von $V_2O_5$.

Auf einer Polyethylenterephthalat-Filmunterlage mit einer Dicke von 100 µm, die mit einer Haftschicht auf Basis Vinylidenchlorid-Methylmethacrylat-Itaconsäure-Copolymer beschichtet ist, wird eine Beschichtung vorgenommen mit der oben beschriebenen kolloidalen Lösung, nachdem 142 ml darvon mit 858 ml Wasser verdünnt wurden. Die Beschichtung erfolgt mit einem Naßauftrag von 100 $m^2$/l. Die Beschichtung wird bei 120°C getrocknet. Eine transparente und praktisch farblose antistatische Schicht wurde erhalten.

Beispiele 31 bis 33

Folienstücke des gemäß Beispiel 30 hergestellten Materials wurden mit verschiedenen Deckschicht-Lackrezepturen (Beispiele 9-11) in einer Trockenschichtdicke von 4 µm beschichtet.

Es wurden Kratzfestigkeit, Ladungsmobilität und Haftung naß und trocken bestimmt. Die nachfolgende Tabelle 4 zeigt, daß die erfindungsgemäße Deckschicht für die Naßhaftung und den Erhalt der Ladungsmobilität der Antistatikschicht nach der Verarbeitung erforderlich ist.

Tabelle 4

| Beispiel | Antistatik-Schicht (Filmunterlage) | Deckschicht | Kratzfestigkeit | RC-Wert in msec vor Naßentwicklung | RC-Wert in msec nach Naßentwicklung | Haftung trocken | Haftung naß | Härtungsbedingungen |
|---|---|---|---|---|---|---|---|---|
| 34 | 30 | - | mittel | <0,006 | >3200 | 0 | 4 | - |
| 35 | 30 | 9 | unverletzt | 0,053 | 0,033 | 0 | 0 | UV |
| 36 | 30 | 10 | " | 0,067 | 0,048 | 0 | 0 | UV |
| 37 | 30 | 11 | " | 0,020 | 0,023 | 0 | 0 | UV |

## Patentansprüche

1. Antistatisch ausgerüstete Kunststoff-Formteile, die auf der antistatisch ausgerüsteten Oberfläche zwei Schichten enthalten, wobei die näher zur Kunststoffoberfläche liegende Schicht eine antistatisch wirkende Schicht, die entferntere Schicht eine Wasser undurchlässige Schutzschicht aus einer strahlenhärtbaren Beschichtungsmenge ist, die durch Einwirkung einer ionisierenden Strahlung gehärtet ist, und keine der beiden Schichten ein Silan der Formel (II)

$$X_{4-m}\text{-}Si(OR_3)_m \qquad \text{(II)}$$

worin

$R_3$ ein Wasserstoffatom, einen aliphatischen Kohlenwasserstoffrest mit weniger als 10 Kohlenstoffatomen oder einen Acylrest mit weniger als 10 Kohlenstoffatomen,

X

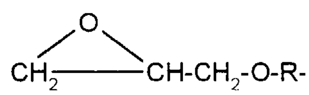

,

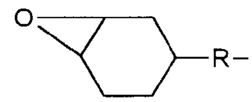

,

$NH_2$-R-, $NH_2$-$CH_2$-$CH_2$-NH-R- oder R-

R einen Kohlenwasserstoffrest mit 1 bis 20 C-Atomen, und

m 1 bis 3 bedeuten,

enthält.

2. Antistatisch ausgerüstete Kunststoff-Formteile nach Patentanspruch 1, dadurch gekennzeichnet, daß die antistatisch wirkende Schicht eine Zubereitung eines Polythiophens, das aus Struktureinheiten der Formel

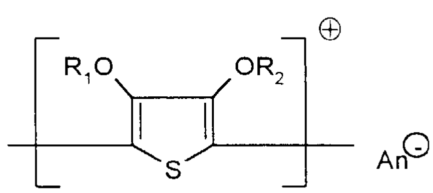

(I)

aufgebaut ist, in der

$R_1$ und $R_2$ unabhängig voneinander für Wasserstoff oder eine $C_1$-$C_4$-Alkylgruppe stehen oder zusammen einen gegebenenfalls substituierten $C_1$-$C_4$-Mkylen-Rest, vorzugsweise einen gegebenenfalls durch Alkylgruppen substituierten Methylen-, einen gegebenenfalls durch $C_1$-$C_{12}$-Alkyl- oder Phenylgruppen substituierten Ethylen-1,2-Rest, einen Propylen-1,3-Rest oder einen Cyclohexylen-1,2-Rest bilden,

und

An$^{\ominus}$ ein Polyanion bedeutet

oder eine Zubereitung eines Vanadiumpentoxidsols enthält.

**3.** Antistatisch ausgerüstete Kunststoff-Formteile nach Patentanspruch 1, dadurch gekennzeichnet, daß die strahlenhärtbare Beschichtungsmasse ein (Meth)acryloylgruppen enthaltendes Präpolymer ist.

**4.** Antistatisch ausgerüstete Kunststoff-Formteile nach Patentanspruch 3, dadurch gekennzeichnet. daß Präpolymer 2 bis 4 (Meth)acryloylgruppen pro Molekül enthält.

**5.** Antistatisch ausgerüstete Kunststoff-Formteile nach Patentanspruch 3 oder 4, dadurch gekennzeichnet, daß das Präpolymer ein Urethanacrylat, ein Epoxiacrylat, ein Polyesteracrylat, ein amin-modifiziertes Polyesteracrylat, amin modifiziertes, ein Polyetheracrylat oder ein aromatisches Polyurethan ist.

**6.** Antistatisch ausgerüstete Kunststoff-Formteile nach Anspruch 1, dadurch gekennzeichnet, daß die strahlenhärtbare Beschichtungsmasse aus

a) 25 bis 95 Gew.-Teilen (Meth)acryloylgruppen enthaltenen Präpolymer,

b) 0 bis 125 Gew.-Teilen reaktivem Verdünner,

c) 0 bis 35 Gew.-Teilen amin-modifiziertem Polyetheracrylat,

d) 0 bis 7,5 Gew.-% UV-Initiator und

d) 0,1 bis 5,0 Gew.-% weiteren Additiven,

besteht, wobei sich die Gewichtsprozente auf die Summe aus a), b) und c) beziehen.

**7.** Antistatisch ausgerüstete Kunststoff-Formteile nach Anspruch 1, dadurch gekennzeichnet, daß die Kunststoff-Formteile Trägermaterialien für fotografische Elemente sind.

**Claims**

**1.** Anti-statically finished plastic mouldings containing on the anti-statically finished surface two layers, wherein the layer closer to the surface of the plastic is a layer having an anti-static action, the more distant layer is a water-impermeable layer of a radiation-curable coating composition, which is cured under the action of ionising radiation, and neither of the two layers contains a silane of the formula (II)

$$X_{4-m}\text{-Si}(OR_3)_m \qquad \text{(II)}$$

in which

$R_3$ means a hydrogen atom, an aliphatic hydrocarbon residue having fewer than 10 carbon atoms or an acyl residue having fewer than 10 carbon atoms,

X means

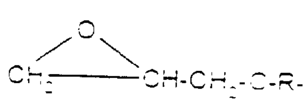

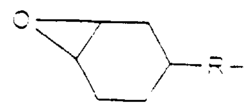

$NH_2$-R-, $NH_2$-$CH_2$-$CH_2$-NH-R- or R-

R means a hydrocarbon residue having 1 to 20 C atoms and

m means 1 to 3.

**2.** Anti-statically finished plastic mouldings according to patent claim 1, characterised in that the layer having an anti-static action contains a preparation of a polythiophene, which is based on structural units of the formula

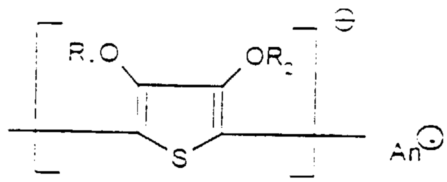

(I)

in which

$R_1$ and $R_2$ mutually independently denote hydrogen or a $C_1$-$C_4$ alkyl group or, together, form an optionally substituted $C_1$-$C_4$ alkylene residue, preferably a methylene residue optionally substituted by alkyl groups, a 1,2-ethylene residue optionally substituted by $C_1$-$C_{12}$ alkyl or phenyl groups, a 1,3-propylene residue or a 1,2-cyclohexylene residue and

$An^{\ominus}$ means a polyanion

or a preparation of a vanadium pentoxide sol.

**3.** Anti-statically finished plastic mouldings according to patent claim 1, characterised in that the radiation-curable coating composition is a prepolymer containing (meth)acryloyl groups.

**4.** Anti-statically finished plastic mouldings according to patent claim 3, characterised in that the prepolymer contains 2 to 4 (meth)acryloyl groups per molecule.

**5.** Anti-statically finished plastic mouldings according to patent claim 3 or 4, characterised in that the prepolymer is a urethane acrylate, an epoxy acrylate, a polyester acrylate, an amine-modified polyester acrylate, an amine-modified polyether acrylate or an aromatic polyurethane.

**6.** Anti-statically finished plastic mouldings according to claim 1, characterised in that the radiation-curable coating composition consists of

a) 25 to 95 parts by weight of prepolymer containing (meth) acryloyl groups,

b) 0 to 125 parts by weight of reactive diluent,

c) 0 to 35 parts by weight of amine-modified polyether acrylate,

d) 0 to 7.5 wt.% of UV initiator and

e) 0.1 to 5.0 wt.% of further additives,

wherein the weight percentages relate to the sum of a), b) and c).

**7.** Anti-statically finished plastic mouldings according to claim 1, characterised in that the plastic mouldings are support materials for photographic elements.

## Revendications

**1.** Pièces usinées en matière plastique antistatiquement équipées qui contiennent sur la surface antistatiquement équipée deux couches, la couche la plus proche de la surface en matière plastique étant une couche antistatiquement active, la couche la plus éloignée étant une couche de protection imperméable à l'eau constituée d'une quantité de revêtement durcissable par rayonnement qui est durcie par l'action d'un rayonnement ionisant, et aucune des deux couches ne contient un silane de la formule (II)

$$X_{4-m}\text{-Si}(OR_3)_m \qquad \text{(II)}$$

où

$R_3$ est un atome d'hydrogène, un reste hydrocarboné aliphatique avec moins de 10 atomes de carbone ou un reste acyle avec moins de 10 atomes de carbone,

X est

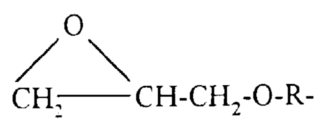

,

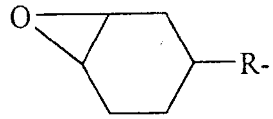

,

$NH_2$-R- $NH_2$-$CH_2$-$CH_2$-NH-R- ou R-

R est un reste hydrocarboné avec de 1 à 20 atomes de carbone, et

m est compris entre 1 et 3.

**2.** Pièces usinées en matière plastique antistatiquement équipées selon la revendication 1, caractérisées en ce que la couche antistatiquement active contient une préparation d'un polythiophène qui est construit à partir de l'unité de structure de la formule

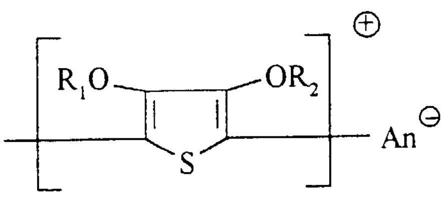

(I),

dans laquelle,

$R_1$ et $R_2$ représentent un atome d'hydrogène ou un groupe alkyle en $C_1$-$C_4$ ou forment ensemble un reste alkylène en $C_1$-$C_4$ éventuellement substitué, de préférence un reste méthylène éventuellement substitué par des groupes alkyle, un reste éthylène-1,2 éventuellement substitué par des groupes alkyle en $C_1$-$C_{12}$ ou phényle, un reste propylène-1,3 ou un reste cyclohexylène-1,2, et

$An^{\ominus}$ est un polyanion

ou une préparation d'un sol de pentoxyde de vanadium.

**3.** Pièces usinées en matière plastique antistatiquement équipées selon la revendication 1, caractérisées en ce que la masse de revêtement durcissable par rayonnement est un prépolymère contenant des groupes (méth)acryloyle).

**4.** Pièces usinées en matière plastique antistatiquement équipées selon la revendication 3, caractérisées en ce que le prépolymère contient de 2 à 4 groupes (méth)acryloyle par molécule.

**5.** Pièces usinées en matière plastique antistatiquement équipées selon la revendication 3 ou 4, caractérisées en ce que le prépolymère est un acrylate d'uréthane, un époxyacrylate, un polyesteracrylate, un polyesteracrylate modifié par une amine, un polyétheracrylate modifié par une amine ou un polyuréthane aromatique.

**6.** Pièces usinées en matière plastique antistatiquement équipées selon la revendication 1, caractérisées en ce que la masse de revêtement durcissable par rayonnement est constituée de :

a) de 25 à 95 parties en poids de prépolymère contenant des groupes (méth)acryloyle,
b) de 0 à 125 parties en poids de diluant réactif,
c) de 0 à 35 parties en poids de polyétheracrylate modifié par une amine,
d) de 0 à 7,5 % en poids d'initiateur UV et
d) de 0,1 à 5,0% en poids d'autres additifs,

les pourcentages en poids se rapportant à la somme de a), b) et c).

**7.** Pièces usinées en matière plastique antistatiquement équipées selon la revendication 1, caractérisées en ce que les pièces usinées en matière plastique sont des matériaux de support pour des éléments photographiques.